# EUROPÄISCHE PATENTSCHRIFT

(11) **EP 3 109 971 B1**
(45) Veröffentlichungstag und Bekanntmachung des Hinweises auf die Patenterteilung: **22.05.2019**
(21) Anmeldenummer: 16172452.1
(22) Anmeldetag: 01.06.2016
(51) Int. Cl.: H02K 1/27, H02K 1/14, H02K 3/28, H02K 21/22, H02K 29/00

(54) **GLEICHSTROMMASCHINE**
DIRECT CURRENT MACHINE
MACHINE A COURANT CONTINU

(30) Priorität: 24.06.2015 DE 102015110127
(43) Veröffentlichungstag der Anmeldung: 28.12.2016
(73) Patentinhaber: Alber GmbH, 72461 Albstadt (DE)
(72) Erfinder: Kauffmann, Harald, 72461 Albstadt (DE); Bitzer, Paul-Gerhard, 72461 Albstadt (DE)
(74) Vertreter: Staudt, Hans-Peter

(56) Entgegenhaltungen:
- DE-B4- 19 983 946
- DE-U1-202009 007 654
- US-A1- 2009 309 452

## Beschreibung

Die vorliegende Erfindung betrifft eine Gleichstrommaschine, insbesondere eine elektrisch oder permanent erregte, bürstenlose Gleichstrommaschine.

Eine Maschine der in Rede stehenden Art ist beispielsweise aus der DE 199 83 946 B4 bekannt. Eine derartige Maschine, die als Motor oder Generator betrieben werden kann, umfasst zwei konzentrisch zueinander angeordnete Bauteile, üblicherweise Rotor und Stator genannt. Eines dieser Teile, also entweder Rotor oder Stator, weist eine bestimmte Anzahl von Magneten auf, beispielsweise Permanentmagnete, die abwechselnd Süd und Nord magnetisiert sind, und das jeweils andere Teil ist mit einer bestimmten Anzahl von Spulen versehen, die durch Umwickeln von Zähnen mit isoliertem Draht gebildet sind. Zwischen diesen Spulen sind jeweils Schlitze gebildet. Diese Schlitze sind somit die Zwischenräume zwischen nebeneinanderliegenden Zähnen.

Insbesondere die jeweilige Verwendung beziehungsweise der Einsatz einer derartigen Maschine bedingen oder legen nahe, ob der Rotor innerhalb oder außerhalb des Stators angebracht ist und welches von beiden Teilen mit den Permanentmagneten versehen ist, wobei dann entsprechend das andere Teil die Spulen und Schlitze aufweist. Die DE 199 83 946 B4 offenbart beispielsweise eine permanent erregte, bürstenlose Gleichstrommaschine, die als Fahrradantrieb in einem Rad als Nabenmotor eingesetzt ist, wobei der zentrale Teil stationär angeordnet und damit Stator ist und die Spulen und Nuten beziehungsweise Schlitze aufweist und der Rotor als Außenläufer mit den Permanentmagneten bestückt ist und, von einer wiederaufladbaren Batterie als Stromquelle gespeist, als Motor zum Antrieb und als Generator zur Energierückgewinnung und Aufladung der Batterie verwendet werden kann. Die Ansteuerung dieser Maschine erfolgt in bekannter Weise über einen stromgesteuerten Inverter mit drei Phasen.

Die Anzahl der Pole, das heißt Magnetpole, und der Schlitze beziehungsweise Nuten, das heißt der Spulen, ist ein wesentliches Merkmal bei der Auslegung einer derartigen Maschine. Die DE 199 83 946 B4 offenbart beispielsweise eine Maschinenvariante mit zweiundzwanzig Polen und vierundzwanzig Schlitzen und eine weitere Maschinenvariante mit vierundvierzig Polen und achtundvierzig Schlitzen.

Neben der Anzahl der Pole und Schlitze, der sogenannten Pol-Nutzahl-Kombination, sind jedoch noch weitere Merkmale einer derartigen Maschine für ihre Eigenschaften bestimmend. Hierzu zählt die Art der Wicklung und die Art, wie die Wicklung der Spulen geschaltet ist, das heißt die sogenannte Spulengruppenverschaltung. Die Spulen können zu Gruppen zusammengefasst werden und die Verschaltung kann erfolgen nach dem sogenannten Sterntyp oder in Form einer Dreiecksschaltung. Aus der DE 199 83 946 B4 ist beispielsweise das Verbindungsmuster C', C, C', C, B, B', B, B', A', A, A', A, C, C', C, C', B', B, B', B, A, A', A, A' bei einer Anordnung von zwei Spulen pro Schlitz und einer Anordnung von vier Spulen in einer Gruppe bekannt.

Die Art der Wicklung und der Verschaltung der Wicklungen beziehungsweise eventueller Spulengruppen muss bereits bei der Auslegung der Maschine in Betracht gezogen werden, entsprechende Abgriffspunkte oder Kontaktpunkte müssen eingeplant und bereitgestellt werden und eine Wickelmaschine, die ein hohes Investitionsvolumen darstellt, muss entsprechend ausgelegt und programmiert werden.

Bei dem Wickelschema gemäß der DE 199 83 946 B4, ersichtlich aus insbesondere Figur 4 dieser Druckschrift, wird bei der Bewicklung für jeden Zahn und einer Bewicklung in Vierergruppen begonnen mit einer Wicklung im Gegenuhrzeigersinn (C'), der eine Wicklung im Uhrzeigersinn (C) folgt, wobei die erste Vierergruppe mit einer Wicklung im Uhrzeigersinn endet (C'CC'C) und die nächste Vierergruppe für die gleiche Phase, nämlich hier die Phase C, mit einer Wicklung im Uhrzeigersinn beginnt und im Gegenuhrzeigersinn endet.

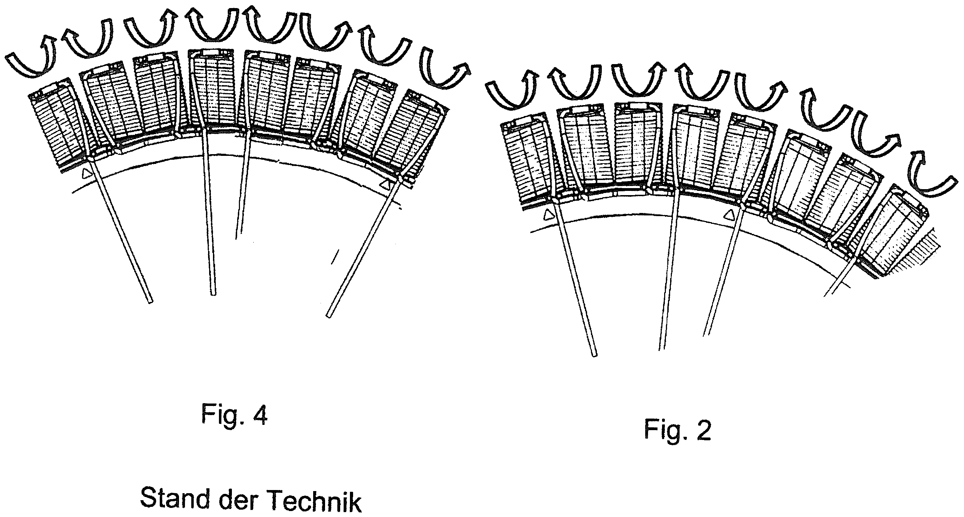

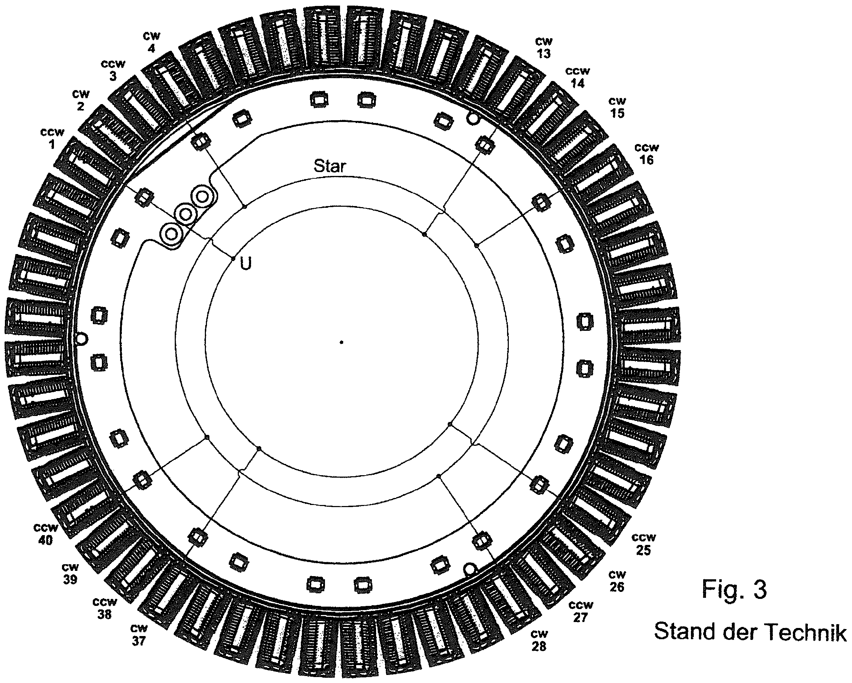

Dieses bekannte, in der DE 199 83 946 B4 in Figur 4 als Abwicklung dargestellte Wickelschema ist zur Verdeutlichung als Draufsicht eines entsprechenden Stators in Figur 3 der vorliegenden Anmeldung dargestellt. Dieses bekannte Wickelschema und die diesbezüglichen Wickelrichtungen sind zudem ausschnitthaft und vergrößert in Figur 4 der vorliegenden Anmeldung dargestellt. Wie dieser Darstellung entnommen werden kann, beginnt die erste Spulengruppe mit vier Spulen, in der Darstellung von links aus gesehen, mit einer Wicklung im Gegenuhrzeigersinn für die erste Spule und endet mit einer Wicklung im Uhrzeigersinn für die vierte Spule von links. Die fünfte Spule von links, das heißt die erste Spule der zweiten Spulengruppe von vier Spulen, ist ebenfalls im Uhrzeigersinn gewickelt und die achte Spule von links, das heißt die vierte und letzte Spule der zweiten Spulengruppe von vier Spulen, ist im Gegenuhrzeigersinn gewickelt.

Dieses bekannte Wickelschema bedingt somit, dass zwei verschiedene Vierergruppen von Spulen existieren beziehungsweise gewickelt werden müssen, nämlich eine Vierergruppe, die mit einer Wicklung im Uhrzeigersinn beginnt, und eine Vierergruppe, die mit einer Wicklung im Gegenuhrzeigersinn beginnt. Dies ist aus den nachfolgend dargelegten Gründen nachteilig.

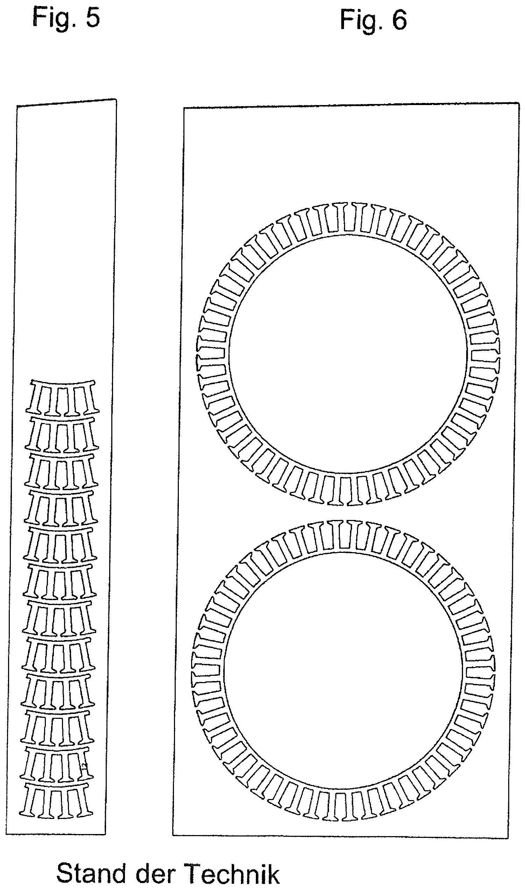

Üblicherweise bestehen Statorkerne bei Elektromotoren der in Rede stehenden Art aus einem Paket übereinandergelegter Einzelbleche. Ein typischer Statorkern verfügt über beispielsweise 40 bis 50 Lagen Einzelbleche. Die Einzelbleche werden hierbei üblicherweise aus Blechstreifen, die von Blechrollen, sogenannten Coils, abgewickelt werden, ausgestanzt. Dieses Ausstanzen kann entweder durch Ausstanzen ganzer Ringe oder durch Ausstanzen von Vierersegmenten erfolgen. Das Ausstanzen von Vierersegmenten führt, wie in den Figuren 5 und 6 gezeigt, naturgemäß zu weniger Verschnitt als das Ausstanzen ganzer Ringe. Zudem kann beim Ausstanzen von Vierersegmenten die Stanzvorrichtung kleiner und damit kostengünstiger ausgeführt werden.

Dieser Statorkern wird dann im Zuge der Herstellung des Elektromotors mit einer Isolierung überzogen. Eine derartige Statorisolierung kann beispielsweise in Spritzguss ausgeführt werden. Hierzu wird beispielsweise entweder das Paket an Blechringen oder die Anordnung von einer entsprechenden Anzahl von Viererblechpaketen in ein Spritzgusswerkzeug eingelegt und mit Kunststoff umspritzt. Bei dem Spritzvorgang wird im Bereich der Zähne eine gewindeartige Profilierung vorgesehen. Diese macht zwar die Herstellung der Spritzgussform komplexer und verteuert somit die Spritzgussform, sorgt aber dafür, dass beim späteren Wickelvorgang, wenn die Zähne mit Draht umwickelt werden, der zur Verfügung stehende Raum möglichst optimal genutzt wird.

Diese Statorisolierung in Form eines umspritzten Kunststoffteils sorgt auch für den Zusammenhalt des Blechpakets. Die Einzelbleche sind untereinander in nicht leitender Weise aufeinandergelegt, beispielsweise durch eine nicht leitende Trennschicht.

Aus dem Vorstehenden ergibt sich, dass die Bereitstellung beziehungsweise Verwendung von einzelnen Vierergruppen produktionstechnische Vorteile nicht nur, wie vorstehend dargelegt, im Stanzprozess bietet, sondern auch bei der Spritzgussumschichtung, da nicht der gesamte Ring spritzgussumschichtet wird, sondern jeweils nur eine entsprechende Vierergruppe, was eine wesentlich kleinere und damit kostengünstigere Spritzgussform ermöglicht.

Werden allerdings, wie beim Stand der Technik gemäß der DE 199 83 946 B4, zwei unterschiedliche Vierergruppen benötigt, müssen auch zwei unterschiedliche Spritzgussformen bereitgestellt werden.

Aus der US 2009/309452 A1 ist eine Gleichstrommaschine bekannt, bei der Spulen einer Phase in Zweiergruppen oder als Einzelspulen angeordnet sind.

Der Erfindung liegt die Aufgabe zugrunde, eine Gleichstrommaschine bereitzustellen, die, insbesondere im Hinblick auf das vorstehend Dargelegte, wirtschaftliche Vorteile in Bezug auf Entwicklung und Herstellung bietet.

Diese Aufgabe wird durch eine Gleichstrommaschine gemäß Patentanspruch 1 gelöst. Vorteilhafte Ausführungsformen sind in den Unteransprüchen angegeben.

Die erfindungsgemäße Gleichstrommaschine ermöglicht aufgrund des erfindungsgemäßen Wickelschemas die Verwendung identischer Vierergruppen zur Bildung des Stators. Wird bei einer erfindungsgemäßen Gleichstrommaschine der Stator aus einzelnen Vierergruppen zusammengesetzt, so ist für die Kunststoffumspritzung der Vierergruppe somit nur eine Spritzgussform erforderlich, da alle Vierergruppen das gleiche Wickelschema aufweisen und somit die gewindeartige Profilierung im Bereich der Zähne für alle Vierergruppen identisch ist.

Ein weiterer Kostenersparniseffekt ergibt sich bei der Umwicklung der Zähne, da diese Vierergruppen einzeln jeweils für sich gewickelt werden können, so dass bei nur einer Art Vierergruppe nur ein entsprechender Wickelvorgang notwendig ist. Die jeweiligen Vierergruppen können dann später auf einen Träger aufgebracht werden und die jeweiligen Enden der Wicklungen im sogenannten Stern- oder Dreieckverfahren verbunden werden.

Die Frage, ob bei der Fertigung des Stators einer erfindungsgemäßen Gleichstrommaschine Einzelsegmente, wie beispielsweise Vierergruppen, oder Gesamtringe verwendet werden, hängt unter anderem von der beabsichtigten Stückzahl ab. Insbesondere bei kleineren Stückzahlen ist die Verwendung von Einzelsegmenten aufgrund der vorstehend dargelegten Faktoren wirtschaftlich günstiger, während bei großen Stückzahlen trotz der höheren Kosten beim Stanzen bei der Fertigung der Statorringe die Verwendung ganzer Ringe wirtschaftlicher sein kann.

Die durch das erfindungsgemäße Wickelschema bereitgestellte Möglichkeit, für den Stator wahlweise entweder Einzelsegmentgruppen oder Gesamtringe zu verwenden, bringt den gravierenden Vorteil mit sich, dass bei kleinen Versuchsreihen beziehungsweise Prototypen Einzelgruppen verwendet werden können, was deren Herstellung erheblich günstiger macht, und später in entsprechenden Großserien bei der Verwendung von ganzen Ringen das gleiche und somit erprobte Wickelschema beibehalten werden kann.

Grundsätzlich kann entweder der Rotor oder der Stator die Spulen aufweisen, wobei dann entsprechend jeweils der Stator oder der Rotor die Magnete aufweist. Zudem kann die erfindungsgemäße Gleichstrommaschine als Außenläufer, das heißt mit innenliegendem Stator, oder als Innenläufer, das heißt mit Innenrotor, ausgeführt sein.

Eine Ausführungsform, die sich gut dazu eignet, als Nabenmotor in einem Zweirad verwendet zu werden, ist so ausgelegt, dass der Stator die Spulen aufweist und der Rotor die Magnete aufweist. Bei dieser Ausführungsform ist zudem der Stator innerhalb des Rotors angeordnet und der Rotor als Außenläufer ausgeführt.

Die Anzahl der Spulen pro Phase ist vorzugsweise ein ganzzahliges Vielfaches von acht. Bei einer vorteilhaften Ausführungsform der Erfindung beträgt die Anzahl der Spulen achtundvierzig und die Anzahl der Magnete vierundvierzig.

Die Erfindung wird im Folgenden weiter erläutert anhand eines Ausführungsbeispiels unter Bezug auf die beigefügten Zeichnungen, in denen
Fig. 1 eine Draufsicht eines Stators einer Ausführungsform der erfindungsgemäßen Gleichstrommaschine ist,
Fig. 2 eine vergrößerte Teilansicht des Stators gemäß Fig. 1 ist,
Fig. 3 eine Draufsicht eines Stators einer bekannten Gleichstrommaschine ist,
Fig. 4 eine vergrößerte Teilansicht des Stators gemäß Fig. 3 ist und
Fig. 5 und Fig. 6 schematisch Blechstreifen zum Ausstanzen von Elementen eines Statorkerns gemäß dem Stand der Technik zeigen.

Eine Ausführungsform der erfindungsgemäßen Gleichstrommaschine entspricht, mit Ausnahme des Wickelschemas und der diesbezüglichen Verschaltung der Spulen, grundsätzlich der in der DE 199 83 946 B4 dargestellten permanent erregten, bürstenlosen Gleichstrommaschine, die als Fahrradantrieb in einem Rad als Nabenmotor eingesetzt ist, wobei der zentrale Teil stationär angeordnet und damit Stator ist und Spulen und Nuten beziehungsweise Schlitze aufweist und der Rotor als Außenläufer mit Permanentmagneten bestückt ist und, von einer wiederaufladbaren Batterie als Stromquelle gespeist, als Motor zum Antrieb und als Generator zur Energierückgewinnung und Aufladung der Batterie verwendet werden kann. Die Ansteuerung dieser Maschine erfolgt in bekannter Weise über einen stromgesteuerten Inverter mit drei Phasen.

Die hier beschriebene Ausführungsform der erfindungsgemäßen Gleichstrommaschine weist vierundvierzig Pole beziehungsweise Magnete und achtundvierzig Schlitze beziehungsweise Spulen auf. Die Spulen sind jeweils in Vierergruppen zusammengefasst.

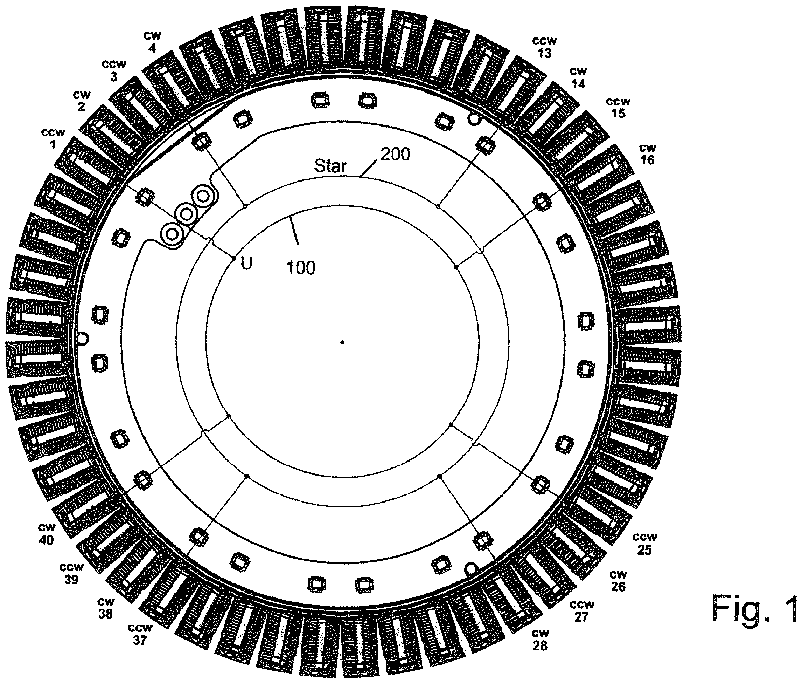

Fig. 1 zeigt einen Stator mit achtundvierzig Spulen, die, ausgehend von Spule 1, im Uhrzeigersinn nummeriert sind, wobei zum Zwecke der Übersichtlichkeit nur die Spulen einer Phase, hier der Phase U, mit Nummern versehen sind. Bei den Spulen der Phase U, das heißt den Spulen 1, 2, 3, 4, 13, 14, 15, 16, 25, 26, 27, 28 und 37, 38, 39 und 40 ist zudem der Wickelsinn beziehungsweise die Wickelrichtung angegeben, wobei ccw (counterclockwise) für Gegenuhrzeigersinn steht und cw (clockwise) für Uhrzeigersinn.

Wie aus Fig. 1 und auch der vergrößerten Darstellung gemäß Fig.2 ersichtlich, weist jede Viererspulengruppe das gleiche Wickelschema auf. Sie beginnt, wenn man in der Darstellung gemäß Fig. 1 den Gegenuhrzeigersinn als Umlaufrichtung definiert, mit einer Wicklung der jeweils ersten Spule der Viererspulengruppe im Gegenuhrzeigersinn und endet bei der jeweils vierten und letzten Spule der Viererspulengruppe im Uhrzeigersinn. Das Wickelschema aller Viererspulengruppen ist somit identisch.

Es versteht sich, dass alternativ bei einer anderen Ausführungsform auch ein anderes Wickelschema für alle Spulengruppen gewählt werden kann, das bei einer Viererspulengruppe mit einer Wicklung im Uhrzeigersinn für die erste Spule beginnt und mit einer Wicklung im Gegenuhrzeigersinn für die vierte und letzte Spule endet.

Die Verschaltung der Spulengruppen ist für die vorliegende Ausführungsform ebenfalls in Fig. 1 dargestellt. Bezugnehmend auf Fig. 1 stellt der innere Ring 100 den positiven Pol der Phase U dar und der vom Zentrum aus gesehen zweite, das heißt gegenüber dem ersten Ring 100 äußere Ring 200 stellt den negativen Pol der Phase U dar. Es werden somit die Spulen 1 bis 4 in der Richtung 1, 2, 3, 4 mit Strom durchflossen, die Spulen 13 bis 16 in der Richtung 16, 15, 14, 13, die Spulen 25 bis 28 in der Richtung 25, 26, 27 und 28 und die Spulen 37 bis 40 in der Richtung 40, 39, 38 und 37.

Mit anderen Worten, die erste und dritte Viererspulengruppe in Umlaufrichtung, im vorliegenden Fall im Uhrzeigersinn, mit den Spulen 1 bis 4 und den Spulen 25 bis 28 werden in dieser Umlaufrichtung mit Strom durchflossen, und die zweite und vierte Viererspulengruppe mit den Spulen 13 bis 16 und 37 bis 40 werden entgegen dieser Umlaufrichtung, das heißt im Gegenuhrzeigersinn, mit Strom durchflossen. Die Verschaltung ist daher so ausgeführt, dass zwei in Umlaufrichtung aufeinanderfolgende Spulengruppen einer Phase, zum Beispiel die erste Spulengruppe mit den Spulen 1 bis 4 und die zweite Spulengruppe mit den Spulen 13 bis 16, so geschaltet sind, dass eine, die erste Spulengruppe mit den Spulen 1 bis 4, in Umlaufrichtung und die andere, die zweite Spulengruppe mit den Spulen 13 bis 16, entgegen der Umlaufrichtung mit Strom durchflossen wird.

Durch diese spezielle Verschaltung wird es ermöglicht, dass trotz der erfinderischen Bereitstellung von identischen Spulengruppen die gleiche magnetische Orientierung erreicht wird, wie bei dem Stand der Technik gemäß der DE 199 83 946 B4.

## Patentansprüche

1. Gleichstrommaschine, aufweisend:
einen Stator und einen Rotor, wobei einer der beiden mehrere Magnete aufweist, die abwechselnd Süd und Nord magnetisiert sind, und der andere mehrere Spulen aufweist, die durch Umwickeln von Zähnen mit isoliertem Draht gebildet sind, um eine Dreiphasen-Wicklung bereitzustellen, wobei zwischen diesen Spulen jeweils Schlitze gebildet und die Spulen zu Spulengruppen von jeweils vier in Umfangsrichtung direkt hintereinander angeordneten Spulen einer Phase zusammengefasst sind, und einen stromgesteuerten Inverter zum Ansteuern der Maschine,
**dadurch gekennzeichnet, dass**
jede Spulengruppe das gleiche Wickelschema aufweist, so dass jede erste Spule einer Spulengruppe, in einer Umlaufrichtung gesehen, im gleichen Wickelsinn gewickelt ist, und dass zwei, in Umlaufrichtung, aufeinanderfolgende Spulengruppe einer Phase so geschaltet sind, dass eine in Umlaufrichtung und die andere entgegen der Umlaufrichtung mit Strom durchflossen wird.

2. Gleichstrommaschine nach Anspruch 1, **dadurch gekennzeichnet, dass** der Stator die Spulen aufweist und der Rotor die Magnete aufweist.

3. Gleichstrommaschine nach Anspruch 1 oder 2, **dadurch gekennzeichnet, dass** der Stator innerhalb des Rotors angeordnet und der Rotor als Außenläufer ausgeführt ist.

4. Gleichstrommaschine nach einem der vorstehenden Ansprüche, **dadurch gekennzeichnet, dass** die Anzahl der Spulen für jede Phase ein ganzzahliges Vielfaches von acht ist.

5. Gleichstrommaschine nach Anspruch 4, **dadurch gekennzeichnet, dass** die Anzahl der Spulen achtundvierzig und die Anzahl der Magnete vierundvierzig ist.

## Claims

1. Direct current machine, comprising
a stator and a rotor, one of them comprising a plurality of magnets alternatively magnetized south and north, the other one comprising a plurality of coils formed by winding insulated wire around teeth in order to provide a three-phase winding, wherein slots are formed between said coils and the coils are grouped in coil groups of four coils of one phase arranged in the circumferential direction directly one behind the other, and
a current controlled inverter for driving said machine,
**characterized in that**
each coil group has the same winding pattern so that each first coil of a coil group, seen in a direction of rotation, is wound in the same winding direction, and that two, in the direction of rotation, subsequent coil groups of one phase are connected such that current flows through one of them in the direction of rotation and through the other one in a direction opposite to the direction of rotation.

2. Direct current machine according to claim 1, **characterized in that** the stator comprises said coils and the rotor comprises said magnets.

3. Direct current machine according to claim 1 or 2, **characterized in that** the stator is arranged inside the rotor, and the rotor is designed as an outer rotor.

4. Direct current machine according to any one of the preceding claims, **characterized in that** the number of coils for each phase is an integer multiple of eight.

5. Direct current machine according to claim 4, **characterized in that** the number of coils is forty-eight, and the number of magnets is forty-four.

## Revendications

1. Machine à courant continu, comprenant :
un stator et un rotor, l'un des deux comportant une pluralité d'aimants alternativement magnétisés sud et nord, et l'autre ayant une pluralité de bobines constituées par enrobage de dents avec du fil isolé pour fournir un enroulement triphasé, des fentes étant respectivement prévues entre lesdites bobines et les bobines étant regroupées en groupes de bobines de quatre bobines d'une phase disposées chacune directement l'une après l'autre dans le sens périphérique, et
un inverseur commandé en tension pour commander la
machine, **caractérisé en ce que**
chaque groupe de bobines présente le même schéma de bobinage, de sorte que chaque première bobine d'un groupe de bobines, vu dans un sens périphérique, est enroulé dans le même sens d'enroulement, et **en ce que** deux groupes de bobines d'une phase se succédant dans le sens de rotation sont connectés de manière à ce que l'un soit parcouru selon le sens périphérique et l'autre soit parcouru contre le sens périphérique.

2. Machine à courant continu selon la revendication 1, **caractérisée en ce que**
le stator comporte les bobines et **en ce que** le rotor comporte les aimants.

3. Machine à courant continu selon la revendication 1 ou 2, **caractérisée en ce que**
le stator est agencé à l'intérieur du rotor et **en ce que** le rotor est conçu sous forme d'un un rotor externe.

4. Machine à courant continu selon l'une des revendications précédentes, **caractérisée en ce que** le nombre de bobines pour chaque phase est un multiple entier de huit.

5. Machine à courant continu selon la revendication 4, **caractérisée en ce que** le nombre de bobines est de quarante-huit et le nombre d'aimants est de quarante-quatre.
